# EUROPEAN PATENT SPECIFICATION

(11) **EP 3 863 907 B1**
(45) Date of publication and mention of the grant of the patent: **07.06.2023**
(21) Application number: 19870807.5
(22) Date of filing: 08.10.2019
(51) Int. Cl.: B62B 5/04, B60L 15/20, B60L 50/51, B62B 7/04, B62B 9/08, B62B 9/22, B62B 5/00, H02K 7/10, B60L 7/24, B60L 50/50

(54) **WHEEL ASSEMBLY FOR A TROLLEY COMPRISING A MECHANICAL BRAKE ALLOWING FOR A SAFE ROCKING PATTERN**
RADANORDNUNG FÜR EINEN WAGEN MIT EINER MECHANISCHEN BREMSE ZUR ERMÖGLICHUNG EINES SICHEREN KIPPMUSTERS
ENSEMBLE ROUE POUR UN CHARIOT COMPRENANT UN FREIN MÉCANIQUE PERMETTANT D'OBTENIR UN SCHÉMA DE BASCULEMENT SÛR

(30) Priority: 10.10.2018 SE 1851237
(43) Date of publication of application: 18.08.2021
(73) Proprietor: Electro Mobility Europe AB, 163 54 Spånga (SE)
(72) Inventor: ANDERSSON, Roland, 181 29 LIDINGÖ (SE)
(74) Representative: Noréns Patentbyrå AB
(86) International application number: PCT/SE2019/050980
(87) International publication number: WO 2020/076227

(56) References cited:
- WO-A1-90/02505
- WO-A1-2016/035727
- WO-A1-2017/176202
- DE-A1- 10 206 785
- DE-A1- 19 526 237
- DE-A1-102013 009 068
- DE-U1-202010 000 595
- DE-U1-202010 009 628
- GB-A- 2 563 573
- JP-A- 2011 088 545
- US-A1- 2018 281 838

## Description

The present invention relates to a wheel assembly for a trolley, and in particular for a self-propelling or otherwise motorized trolley, such as a children's stroller or a transport trolley for liquid samples.

Motorized trolleys are as such well-known, both for children's strollers and also for transport trolleys for liquid samples, such as for use within the medical or pharmaceutical industries. Such motorized trolleys may have various functions, such as a self-propelling function aiding a user in the manoeuvring of such trolley. A self-propulsion decreases the necessary pushing force on the part of the user, making it possible to push or pull such a trolley using less effort in general.

Furthermore, it is known for trolleys to be arranged with a rocking function, for rocking a transported child or liquid samples - in the former case in order to soothe the child, in the latter for instance to keep the samples from settling.

Prior art trolleys include US 8499898 B2, disclosing a children's trolley with a speed control; WO 2014013482 A1, disclosing a rocking functionality for use with a children's trolley; US 5937961 A and US8033348 B1, disclosing a respective disconnectable motor for a trolley; and EP 2019016 A2, showing a motor arranged at a driven shaft.

In particular, EP3322630A1 discloses a trolley of the above type, featuring both a freewheeling pattern as well as a feedback assisted propulsion drive pattern and a rocking drive pattern. To achieve these, and potentially other, patterns in a convenient and efficient manner, a particular type of electric motor is devised.

However, in particular for the rocking drive pattern, security is an issue. It is difficult to control the behaviour of a rocking trolley when left unattended.

US 2018/0281838 A1 discloses a self-propelling trolley assembly having a rocking drive pattern.

The present invention solves the problem of increasing security when using the rocking drive pattern of a trolley of the above described type.

Hence, the invention is defined in independent claim 1 and relates to a wheel assembly for a self-propelling trolley, which wheel assembly is arranged to be mounted on said trolley and comprises a wheel; an electric rotary motor; an electric connector, arranged to connect the motor to a battery for powering the electric motor, which battery may or may not be comprised in the wheel assembly; and a mechanical brake comprising an engagement part associated with an engaged state, in which the mechanical brake is activated so that a rotational movement of the wheel is limited by the mechanical brake, and a disengaged state, in which the mechanical brake is inactivated so that the wheel can rotate freely, which electric motor is arranged to perform a rocking drive pattern of the trolley by the motor propelling the wheel such that the trolley moves backwards and forwards; which wheel assembly is characterised in that the mechanical brake is arranged so that, in said engaged state of the engagement part, the wheel can turn freely in relation to the trolley between a first rotary limit position and a second rotary limit position but not beyond said first and second limit positions, the first and second rotary limit positions being arranged in relation to a radius of the wheel so that the trolley is allowed to move freely across a ground distance of between 5 and 20 cm in said engaged state of the engagement part.

In the following, the invention will be described in detail, with reference to exemplifying embodiments of the invention and to the enclosed drawings, wherein:
Figure 1 is an overview of a trolley according to the invention;
Figure 2 is an overview of a first exemplifying wheel assembly according to the invention, suitable for use in a trolley of the type illustrated in Figure 1;
Figure 3 illustrates a second exemplifying wheel assembly according to the invention, also suitable for use in a trolley of the type illustrated in Figure 1; and
Figure 4 is a schematic side view of an electric motor useful in a trolley assembly according to the invention.

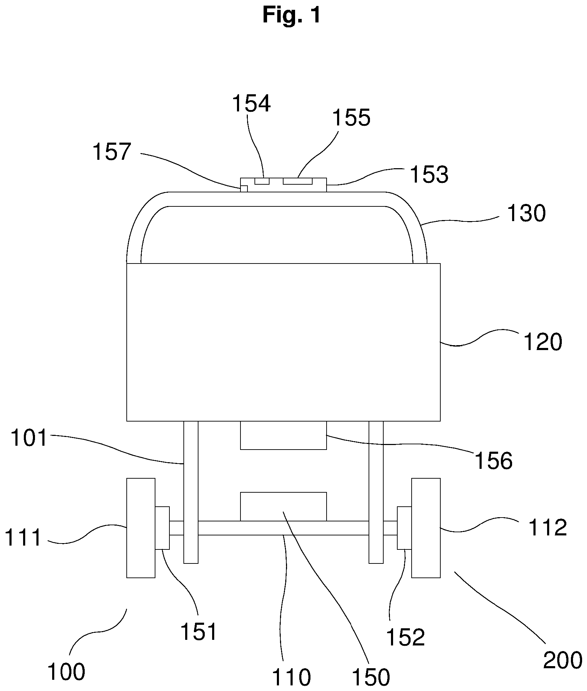

Figures 1-3 share the same reference numerals for the same or corresponding parts.

Figure 1 illustrates, in a simple overview, a trolley 100 according to the present invention. The trolley 100 comprises a wheel assembly 200 according to the invention, of the type discussed in further detail below. As mentioned above, the trolley 100 may be a children's trolley or stroller, alternatively be a transport trolley for liquid samples, such as biological or chemical test tube samples for use within the medical, pharmaceutical or biochemical fields. It is realized that, in the former case, a main body 120 of the trolley 100 may comprise a child's seat or bed; and in the latter case, the main body 120 may comprise compartments for essay tubes or similar.

The trolley 100 constitutes a self-propelling trolley assembly, comprising a battery 156; at least one wheel axis 110 which is driven by at least one respective electric motor 151, 512, which electric motor(s) 151, 152 is or are powered by the battery 156. In Figure 1, which is illustrated from the back of the trolley 100, only one wheel axis 110 is shown. It is realized, however, that typically two wheel axes will be present, each of which may be driven using one or two motors. Alternatively, one electric motor may also propel a whole axis 110. A motor propelling an axis to which only one wheel is connected may be arranged in connection to the propelled wheel in question; while an electric motor propelling an axis interconnecting two wheels, sharing one and the same axis, may be arranged between the wheels in question, as is exemplified in Figure 1.

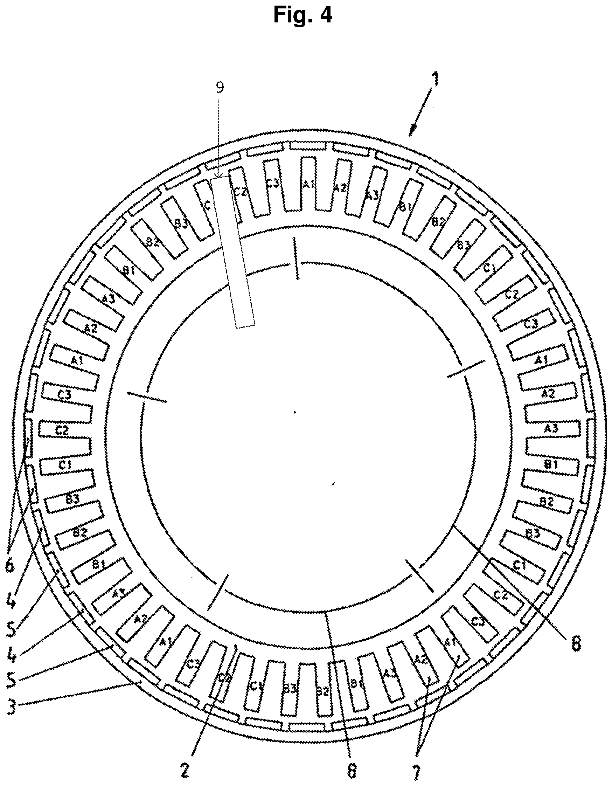

A rotation position or velocity sensor (see Figure 4) is preferably installed in at least one of said motors 151, 152, preferably in each motor 151, 152 so as to measure the position or velocity individually in said motors 151, 152, and is arranged to sense the rotation position or rotation velocity of at least one trolley 100 wheel 111, 112 or axis 110.

A user interface 153, preferably comprising a function switch 157, a dead man's switch 154 and a user velocity setting control 155, is preferably arranged on a handlebar 130 of the trolley 100. The dead man's switch 154 must preferably be held or pressed in for the trolley to be propelled using motor 151, 152 power, as described below. The velocity setting control 155, which may be a lever, a turnable handle or similar, is arranged to a allow the user to set a desired trolley 100 velocity, such as to a specific value within a continuous allowable interval or one value from a discreet set of predetermined such velocities.

The trolley 100 also comprises said main body 120 and a chassis 101.

A control unit 150 of the trolley 100 is arranged to regulate the electric motor 151, 152 based upon input from said user interface 153, so as to affect a rotation of said wheel or wheels 111, 112 according to particular one of a set of drive patterns, which drive patterns are preferably at least three of number.

More precisely, the control unit 150 is arranged to implement a rocking drive pattern, as will be described below. In addition to this rocking drive pattern, the control unit 150 may also be arranged to implement a feedback assisted propulsion drive pattern, based upon information read from the said position or velocity sensor or sensor s 9; and/or a freewheeling drive pattern. There may also be further drive patterns, as exemplified below.

Furthermore, all of said drive patterns may be implemented by the control unit 150 by controlling a voltage pattern being supplied to the electric motor 151, 152 in question, so that different drive voltage patterns are provided to the electric motor 151, 152 for different drive patterns. Such drive voltage patterns are preferably implemented in software in a generally programmable hardware circuit arranged in the control unit 150, which hardware circuit comprises a memory, a micro processor and electrical communication means. It is realized that the control unit 150 communicates with user interface 153, motors 151, 152, and so on, using conventional communication means such as wireless or wired digital interfaces.

Importantly, the electric motor 151, 152, and in particularly all electric motors used to propel one or several of the trolley 100 wheels 111, 112, may preferably be of the below described type in which the stator comprises a number of stator poles which is not an integer multiple of a corresponding number of rotor poles and in which the stator poles are subdivided into at least three magnetically and electrically identical subsets that are mounted one after the other around the angular direction of the electric motor 151, 152.

Such a trolley assembly offers a very simple and robust construction, which may still offer a flexible and broad flora of drive functionality and hence user comfort. At the same time, it is safe to use and can also easily be used as a conventional, non-driven trolley when so is desired. In particular, the motor 151, 152 does not require a gearbox, which is preferred.

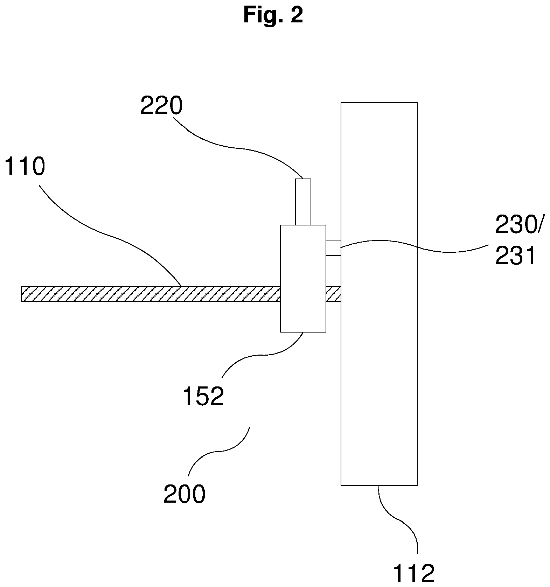

Figure 2 illustrates a wheel assembly 200 for a self-propelling trolley 100 of the above described type, which wheel assembly 200 is arranged to be mounted on said trolley 100 and there constitute a driven wheel of the trolley 100 in question. The trolley 100 may comprise one; a pair; three or even four such wheel assemblies, while it may further comprise one or several additional, non-driven wheels. The trolley 100 may also comprise one or several driven wheels that are not part of a wheel assembly type as described herein. Hence, the mechanical brake described below may be applied to one or several of a set of one or several driven wheels, in addition to a set of zero or several non-driven wheels used on the trolley 100.

As illustrated in Figure 2, the wheel assembly 200 comprises a wheel 112, arranged to allow the trolley 100 to roll forwards and backwards as is conventional as such. The wheel 112 is rigidly connected to said wheel axis 110, which in turn may be specific for the wheel 112 in question or which may be shared with another wheel in a wheel pair as described above.

The wheel assembly 200 further comprises the electric motor 152, arranged to forcibly turn the wheel 112 about said wheel axis 110 so as to propel the trolley 100 in a forwards/backwards direction.

Also, the wheel assembly 200 comprises an electric connector 220, arranged to connect the electric motor 152 to the battery 156 for powering the electric motor 152. The battery 156 may be comprised in the wheel assembly 200, but may also not be a part of the wheel assembly 200 (the latter being illustrated in Figures 1 and 2).

Moreover, the wheel assembly 200 comprises a mechanical brake 230, which is arranged to mechanically interact with the wheel 112 by engagement. More particularly, the mechanical brake comprises an engagement part 231 associated with an engaged state, in which the mechanical brake 230 is activated so that a rotational movement of the wheel 112 is limited by the mechanical brake 230, and a disengaged state, in which the mechanical brake 230 is inactivated so that the wheel 112 can rotate freely.

As described above, the electric motor 152 is arranged to perform a rocking drive pattern of the trolley 100.

Mechanical brakes for use with electrically propelled trolleys 100 are known as such. However, according to the present invention the mechanical brake 230 is arranged so that, in said engaged state of the engagement part 231, the wheel 112 can turn freely in relation to the trolley 100. This freedom of rotary motion is then present between a first rotary limit position and a second rotary limit position, but not beyond said first and second limit positions. In other words, despite the engagement of the mechanical brake 230, the wheel 112 is still allowed to rotate freely between said first and second rotary positions, in effect allowing the trolley 100 to roll forwards/backwards within a forwards/backwards displacement interval indirectly defined by said first and second rotary positions.

In particular, according to the invention the first and second rotary limit positions are arranged in relation to a radius of the wheel 112 so that the trolley 100 is allowed to move freely, in a forwards/backwards direction of the trolley 100, across a ground distance of between 5 and 20 cm, in preferred embodiments between 5 and 10 cm, in said engaged state of the engagement part 231.

This provides full security while still achieving an efficient rocking function of the trolley 100. In addition, the solution is simple and therefore inexpensive and possible to design in a way which is easy to manufacture.

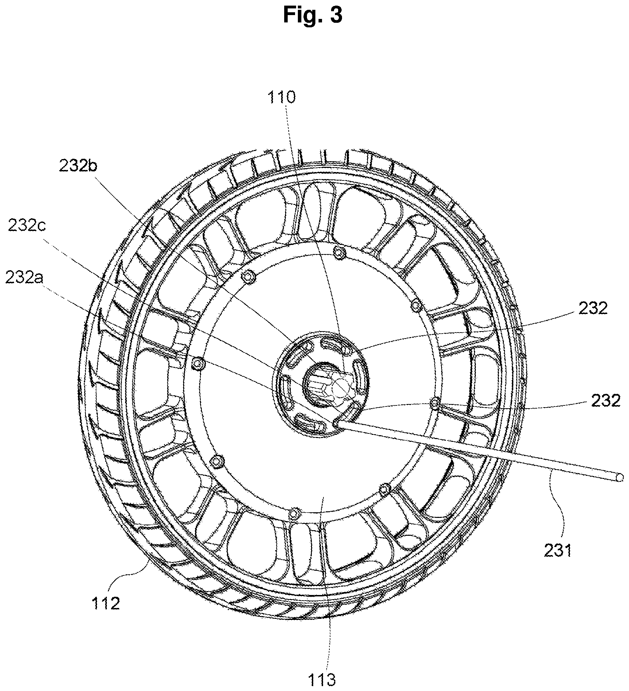

In particular, the engagement part 231 may comprise a pin (see Figure 3) which is arranged to be inserted into a corresponding cavity 232, such as a recession or a through hole, to achieve said engaged state.

The cavity 232 may be formed in any suitable structural element. For instance, a stator of the electric motor 152 may be arranged to rotate with the wheel 112 while a rotor of the electric motor 152 may drive the axis 110. In this case, the cavity 232 may be arranged in a structure which is fixed in relation to the axis 110. However, in the example illustrated in Figures 2 and 3, the stator of the electric motor 152 is fixed to the rest of the trolley 100, and the rotor of the electric motor 152 is arranged to drive the wheel 112. In this case, the cavity 232 may be arranged in the wheel 112 structure, for instance as a part of a wheel 112 hub 113. Alternatively, the cavity 232 may in this latter case be arranged in some other structure rigidly connected to, and rotating with, the wheel 112.

In particular the case in which the cavity 232 is arranged in the wheel 112 hub 113, the wheel 112 hub 113 may be formed from a connected piece of plastic material, formed by extrusion or in any other suitable manner, in which the cavity 232 is an integrated part of the hub 113 structure.

In particular, and as is illustrated in Figure 3, the cavity 232 may comprise a first side wall 232a, defining said first rotary limit position by its engagement with the pin in its engaged state, and a second side wall 232b, defining said second rotary limit position by its engagement with the pin 231 in its engaged state.

Moreover, the cavity 232 may comprise an elongated track 232c of circular arc shape, arranged to allow the said pin to, in said engaged state, travel along said track 232c between said first 232a and second 232b side walls. This way, the elongated track 232c, the circular arc length of which is defined by the side walls 232a, 232b, defines the above discussed rotary freedom of motion for the wheel 112 when the mechanical brake 230 is activated.

Preferably, and as is illustrated in Figure 3, the cavity 232 may comprise at least two, preferably between 4 and 8 (in Figure 3, the preferred case of 6), elongated tracks of respective circular arc shape, arranged along one and the same circle which is concentric with the wheel 112 when the wheel 112 is mounted on the trolley 100. This will allow the mechanical brake 230 to be easily activatable irrespectively of a current rotary position of the wheel 112 in relation to the mechanical brake 230 - either the pin is located in front of one of the said sub cavities of the cavity 232, or a minor rotary alignment of the wheel 112, such as by pushing or pulling on the trolley only slightly, will align the pin with one of said sub cavities.

In order to simplify its activation, the mechanical brake 230 may be arranged to only engage with a single one of the wheels 111, 112 of the trolley 100.

In general, the engagement part 231 comprises a first engagement means (such as the pin in Figure 3), arranged on a first wheel assembly 200 part which is stationary in relation to the trolley 100 when the wheel assembly 200 in question is mounted on the trolley 100, and a second engagement means (such as the cavity 232 in Figure 3), arranged on a second wheel assembly 200 part which is arranged to rotate with the wheel 112. Then, the first and second engagement means are arranged to cooperate so as to achieve said engaged and disengaged states.

Further generally, the first engagement means may then be arranged to be moved back and forth in a direction not parallel to a rotary plane of the wheel 112 when the wheel 112 is mounted on the trolley 100, so as to achieve said engaged and disengaged states. For instance, the pin illustrated in Figure 3 is arranged to move, into and out of engagement with the cavity 232, in a direction perpendicularly or at least substantially perpendicularly to a main plane of the wheel 112.

In particular in this latter case, it is preferred that the electric motor 152 is fixed to the first wheel assembly 200 part, and arranged to automatically move the first engagement means 231 in said direction. The force applied to the first engagement means 231 may then preferably be generated by the electric motor 152. This way, the user does not have to apply any manual force so as to activate or deactivate the mechanical brake 230 in connection to operating the trolley 100 in the said rocking pattern. For instance, the mechanical brake 230 may be automatically activated, by imparting movement to the first engagement means 231, in connection to activating a rocking drive pattern, by the control unit 150. In the preferred case with several sub cavities illustrated in Figure 3, the rocking movement of the trolley 100 may preferably have a forwards/backwards trolley 100 rocking amplitude which is sufficiently long so that the pin will always be aligned with at least one of the sub cavities somewhere along the path of the pin in relation to the cavity 232 during such rocking movement. Then, the control unit 150 may be arranged to detect the rotary movement limitations of the wheel 112 and adapt the rocking movement so as to fit completely within the rotary movement limitations as defined by the side walls 232a, 232b. Such adaptation may be made in a feedback manner based upon readings from position sensor 9.

To any extent, the rocking drive pattern amplitude is smaller than a corresponding amplitude of the rotary freedom of movement, allowing the rocking drive pattern to be fully implemented without being limited by the activated mechanical brake 230.

The present inventor has devised a braking function in which the mechanical brake 230 defines an outer limit for the amplitude of the rocking function, and in which the rocking function is implemented so that it does not interfere with the mechanical brake 230 during its operation. At the same time, the mechanical brake 230 is active to define a braking function operative in securing the position of the trolley 100.

As described above, the wheel assembly 200 may comprise the electric motor 152 as well as the wheel 112 and the mechanical brake 230. In this case, the wheel assembly may be used to retrofit any manually operated trolley 100 to be electrically propelled, and in particular to be propelled using the drive patterns described herein, including the rocking drive pattern with full security automatically provided by the mechanical brake 230. In this case, the control unit 150 may be installed as a part of said retrofit, and connected in a suitable manner to the motor 152.

In particular, the wheel assembly 200 may be provided as a self-contained package, which can be installed by simply mounting the wheel assembly 200 as a conventional wheel directly onto the wheel axis 110. In this case, the battery 156 may be integrated in the wheel assembly 200. Furthermore, in this and other embodiments, the control unit 150 may also be integrated into the wheel assembly 200, and may for instance be arranged to communicate, wirelessly or by wire, with the interface 153, that may be mounted on the handle bar 130 or in any other suitable place. As an alternative, the control unit 150 may be arranged to communicate directly with a portable user device, such as a smartphone, via a suitable wireless interface such as Bluetooth^{®} or WiFi.

In preferred embodiments, the present invention may make use of a particular type of electrical motor, namely a brushless electric motor with a stator comprising a number of stator poles and a rotor comprising a number of rotor poles. In this type of motor, the stator comprises a number of stator poles which is not an integer multiple of a corresponding number of rotor poles, and the stator poles are subdivided into at least three magnetically and electrically identical subsets that are mounted one after the other around the angular direction of the electric motor. Preferably, the stator poles are equidistantly arranged along a stator periphery. Correspondingly, the rotor poles are preferably equidistantly arranged along a rotor periphery.

Preferably, the motor 152 is arranged to directly drive a respective wheel 111, 112 of the trolley 100. For instance, the motor 156 can be mounted on a wheel axis 110 and drive a wheel 111, 112 in relation to said axis 110, in which case two, preferably substantially identical, motors can be mounted on either side of the axis 110, driving one respective wheel 111, 112 each. In this case, it is desired that the herein-described feedback control mechanism is performed individually on each such driven wheel 111, 112, using position sensor 9 data pertaining to the respective wheel 111, 112 in question, providing adequate auto-propulsion also when turning the trolley 100. Alternatively, a motor 152 of said type can be mounted to drive a wheel axis 110 in turn propelling two wheels 111, 112 at the same time. Wheels 111, 112 on more than one wheel axis 110 may also be driven, in the corresponding manner. Hence, it is foreseen that between 1 and at least 4 motors 151, 152 can be used with one trolley 100. Preferably, all motors 151, 152 are controlled by, and communicate with, the same control unit 150. It is noted that, in each of these cases, each such electric motor 152 may be integrated as a part of a respective wheel assembly 200 of the present type.

The use of such an electric motor 152 for propelling a trolley 100 assembly of the present type achieves a number of advantages.

Firstly, such a motor provides very low cogging of the motor, which provides for a smooth rotation of the wheel.

Secondly, the motor can be precisely controlled, based upon a feedback algorithm taking into consideration rotation positional feedback from the motor itself, across a broad spectrum of rotation velocities and patterns.

Thirdly, the motor allows being used as a generator for motor braking the trolley while recharging the battery using the generated current.

Fourthly, the motor also allows for a free-wheeling function of the present type.

At the same time, there are many types of electrical motors that are as such in general suitable for use in a self-propelled trolley assembly, such as a conventional stepping motor or a conventional brushless motor of any other type. The present inventors have discovered that, in contrast thereto, a motor 152 of said specific type is particularly well-suited for the various trolley functionality described herein, and provides a very simple yet robust construction with a minimum of movable parts and wear details.

A motor of the above described type is, as such, known from EP 0996217 B1, which is specifically referred to herein for information pertaining to the motor as such. Figure 2 of EP 0996217 B1, which is also shown, in an edited version, as Figure 4 of the present application, schematically illustrates such a motor 1, having a stator 2 and a rotor 3. In Figure 4, the rotor 3 surrounds the stator 2, it is however realized that the situation can also be the reversed.

The stator 2 is arranged with stator poles 7, and the rotor 3 is arranged with rotor poles 6. Between the poles 6, 7, there is a gap, such as an air gap, so that the poles 6, 7 do not physically come into contact with each other. This allows the motor 1 to turn substantially without friction.

The rotor poles 7 are divided into pairs of alternate south pole 4 and north pole 5 rotor poles, preferably in the form of permanent magnets.

The motor is preferably arranged to be fed with an alternating current, either using a motorinternal AC/DC converter or using such a converter arranged as a part of, or an external part controlled by, the control device (see below). In the exemplifying case shown in figure 4, the motor is a three-phase AC motor.

More precisely, the stator poles 7 are fed, by said AC/DC converter (which may comprise phase-shifting circuitry), with DC voltage according to the following:

| **Pole reference** | **Phase** |
|---|---|
| A1, A3 | 0° |
| A2 | 180° |
| B1, B3 | 120° |
| B2 | 300° |
| C1, C3 | 240° |
| C2 | 60° |

In general, in the document EP 0291219 A1, to which specific reference is made herein regarding the details of the pole arrangement and power feeding to the poles of the motor 1, it is described how to select such phase values, the number of stator poles 7 and the number of rotor poles 6.

All poles with the same reference (A1, A3, A2, etc.) can be connected in series or, preferably, in parallel.

What is important for the present purposes is that the stator 2 comprises a number of stator poles 7 (in the present case 45 poles 7) which is not an integer multiple of a corresponding number of rotor poles 6 (in the present case 40 poles 6), and that the stator poles 7 are subdivided into at least three magnetically and electrically identical subsets 8, or coherent zones, that are mounted one after the other around the angular direction of the motor 1. This can also be expressed so that the stator 2 is arranged with a five-fold rotation symmetry with respect to its poles 7. In Figure 4, the subsets 8 are five of number, but it is realized that they can be more or fewer, as long as they are at least three.

The combination of using such different numbers of poles 6, 7, with arranging the stator poles 7 in such subsets 8, provides for low cogging in the motor 1 while supporting all the desired features of such a motor for the present purposes in a way which has proven very advantageous in practical tests by the inventors, especially in terms of efficiency, smoothness, noise levels and exactness.

Furthermore, the motor 1 supports using a hall position sensor 9, schematically illustrated in Figure 4. The position sensor 9 may be arranged to sense the rotation position of the motor, or comprise logic so as to provide a value for the current rotation velocity directly.

According to a preferred embodiment, the position or velocity sensor 9 is a hall effect sensor, arranged to provide the control unit 150 with rotary motor position or velocity information.

As described above, the control unit 150 is arranged to implement a number of drive patterns of the trolley 100 by imparting forces to the trolley 100 wheels 111, 112 via said at least one electric motor 151, 152.

One such drive pattern is a user settable speed drive pattern. Preferably, in this pattern the user sets, via control 155, a desired trolley speed or velocity. When active, for instance by the said control 155 being set, and/or by a separate powercontrol being switched on, the control unit 150 will continuously measure a speed of the trolley 100, using sensor 9, and compare it to the said user-set speed by regulating a voltage supplied to the motor 151, 152 from the battery 156 according to a feedback loop so as to achieve said user-set speed or velocity. The user-set velocity may be specified using control 155 as a numerical value, such as "5 m/s", or by the user for instance selecting a value from "low", "medium", "fast", which value is then translated into a specific trolley 100 velocity.

This user settable speed drive pattern feedback loop preferably comprises raising the voltage supplied to each motor 151, 152 when the read velocity decreases and/or is below the user-set velocity and vice versa. Preferably, a control loop, such as a PID control loop, is implemented by the above mentioned software implemented in the control unit 150, which control loop aims at maintaining a trolley 100 velocity as close to the user-set velocity as possible. The implementation of such a feedback loop can be conventional as such.

However, the control unit 150 controls the motor 151, 152 by controlling a voltage applied to each of the stator 2 poles 7 as described above, using a variable voltage with a phase difference applied to different poles, as described above. This provides for a smooth and continuously regulatable feedback control, resulting in an agreeable user experience.

In parallel or, preferably, in series with said voltage-controlling feedback control loop, such as downstream of said voltage-controlling feedback control loop, the user settable speed drive pattern feedback control loop further comprises a feedback loop regulating a motor 151, 152 power consumption based upon a detected present motor 151, 152 usage of electric current, so that an increased current usage results in an increased power consumption.

This additional feedback control loop, which as such may also be conventional, is preferably implemented in motor 151, 152 control circuitry within the motor 151, 152 itself.

Hence, the control unit 150 continuously regulates the voltage supplied to the motor 151, 152 so as to achieve the user-set velocity. At the same time, the motor 151, 152 current usage is monitored, and the instantaneous power consumption of the motor 151, 152 is regulated based upon the instantaneously used current. The combination of these two feedback control loops provide for a very efficient yet smooth control of the trolley 100 velocity. It is preferred that the latter feedback control loop, of the motor 151, 152 power consumption, is used also in other drive patterns so long as the motor 151, 152 power is active. The same motor current vs power feedback loop can, in fact, be active in the same way irrespectively of the type of drive pattern currently being implemented by the control unit 150.

Hence, the user settable speed feedback control will automatically reach and maintain the user-set trolley 100 speed. However, when the user tries to push the trolley 100 faster than the user-set speed, or when travelling downhill and the trolley 100 picks up speed above the user-set speed, it is preferred that the feedback control loop in said user settable speed drive pattern also comprises engaging an electrically working braking mechanism. This braking mechanism, which is not the same as the mechanical brake 230, is preferably automatically activated when the user-set speed is exceeded by a predetermined relative or absolute value. In some embodiments, the predetermined value may be the absolute value "zero", meaning that the braking mechanism is automatically activated as soon as the detected speed of the trolley 100 surpasses the user-set speed. It is realized that the trolley speed, again, can be read using sensor 9.

In one preferred example of such electric braking mechanism, the motor 151, 152 is arranged to be driven in a generator mode. This generator mode involves an active control by motor 151, 152 control circuitry arranged in connection to the motor 151, 152 and/or by the control unit 150, which active control involves the control unit 150 actively controlling the direction of induced currents due to the forced rotation of the motor 151, 152 rotor 3 in relation to the motor 151, 152 stator 2, and feeding said current to the battery 156 for recharging the battery 156. In other words, the control unit 150 is arranged to set current directions to and from the stator 2 poles 7 in a pattern, as a function of the motor 151, 152 rotation, which corresponds to the supplied current when driving the motor 151, 152, so that a net current can be drawn from the stator 2 poles 7 and be supplied to the battery 156 for recharging the same. Hence, the said electric braking mechanism in this preferred case comprises the control unit 150 switching the motor 151, 152 into generator mode, and using the generated electric voltage to recharge the battery 156.

Of course, the mechanical brake 230 may also be arranged to be activated by the control unit 150 so as to guarantee a standstill (within the said limited freedom of movement) of the trolley 100.

Preferably, a generator mode braking mechanism is combined with the mechanical brake 230, so that the mechanical brake 230 is activated in case the generator mode braking mechanism is active but the trolley 100 speed is still above a certain predetermined value, which value may be dependent upon the user-set speed.

Another drive pattern is a free-wheeling drive pattern, in which the control unit 150 is arranged to not impart any propulsion force to the wheels 111, 112 and at the same time minimize the internal drive friction of the motor(s) 151, 152. Thereby, the trolley 100 behaves like a conventional non-motor propelled trolley. The free-wheeling drive pattern is preferably activated by the control unit 150 implementing to the motor(s) 151, 152 a corresponding freewheeling drive mode, preferably by simply switching off the voltage supplied to the motor 151, 152.

In particular, it is preferred that the free-wheeling drive pattern is not initiated by mechanically disengaging any part, such as the motor 151, 152 itself. Instead, the rotor 3 is preferably arranged to rotate in relation to the stator 2 when the trolley 100 freewheels.

According to a particularly preferred embodiment, the free-wheeling drive pattern is active as long as the main power to the control unit 150 is switched off. This is achieved by the motor being of the type described above, offering very low-friction free-wheeling when not supplied any pole 6, 7 voltage. The free-wheeling drive pattern may also be activated by actively manipulating a switch also when the general power to the control unit 150 is switched on. It is furthermore preferred that a feedback-assisted drive pattern is automatically activated as a result of the power to the drive unit 150 being switched on.

In general, in case the user-set speed is set to zero, the control unit 150 is preferably arranged to apply at least one of said braking mechanisms to the trolley 100, so as to keep it from moving without either pushing or pulling with some force, or setting the user-set speed to a non-zero value.

Preferably, in case at least one wheel axis 110 comprises one motor 151, 152 for each wheel 111, 112 on such axis 110, each such motor 151, 152 is individually controlled by the control unit 150 to maintain the said user-set speed for the wheel 111, 112 in question during the feedback-controlled propulsion mode.

There may be different types of feedback-controlled propulsion drive patterns, for instance selectable using control 157. For instance, a minimum-speed drive pattern may also be implemented by the control unit 150, in a way corresponding to the above-described user-set speed drive pattern.

Furthermore, in a preferred embodiment a motor 151, 152 driving force, by control of the control unit 150, is applied based at least partly on a torque sensor providing information to the control unit 150 regarding a non-zero torque applied to a user control, such as a rotating handlebar, comprised in the interface 153. In this case, the control unit 150 controls the motor 151, 152 to apply a non-zero driving force as long as a non-zero torque is sensed. Preferably, such an applied (by the user) torque is translated into a selected speed, by a translation algorithm in the control unit 150 which interprets a higher torque as a higher speed than the current rotation speed of the trolley 100. In other words, the user can control the set trolley speed, in relative terms as compared to a currently measured trolley speed, by applying more or less torque.

As an alternative or addition to this, a push force sensor, such as arranged in the trolley 100 handlebar 130, may be arranged to directly sense a pushing force applied by the user to the trolley 100, and only allow the control unit 150 to apply a driving force to the wheels 111, 112, via motor(s) 151, 152, in case a non-zero such pushing force is applied by the user. The pushing force sensor may be the same as the dead man's switch, or be used instead of the latter. The above-described braking mechanism may also be activated in case no such torque or pushing force, of at least a predetermined minimum magnitude, is applied, as a safety mechanism when the trolley 100 is parked.

In one preferred embodiment, the said torque sensor is arranged to discriminate between a backwards- and forwards directed torque, whereby the/each motor 151, 152 is arranged to be driven backwards or forwards during said feedback assisted propulsion drive pattern depending on the direction sensed by the torque sensor.

Alternatively, or in addition thereto, the control unit 150 may preferably be arranged to sense a rolling direction of the trolley 100 based upon information provided by said position or velocity sensor 9, and to implement said feedback assisted propulsion drive pattern in the said sensed rolling direction.

Preferably, the user settable feedback propulsion feedback pattern is implemented entirely or substantially identically for forward- or backward propulsion. Hence, if the user is conveying the trolley 100 forward and, using a pulling force, brings the trolley 100 to a halt and then pulls further to bring the trolley 100 to a backwards motion, the control unit 150 will automatically detect this change of rolling direction and instead regulate the motor 151, 152 with the aim of achieving and maintaining a backwards motion of the trolley 100. The aimed-for backwards motion speed may be the same as the user-set forwards speed, or a lower speed which may be predetermined or proportional to the user-set speed for the forwards propulsion case. Correspondingly, when the user again brings the trolley 100 to a halt and starts pushing it forward, the control unit 150 again automatically detects this and switches to a regulation again aiming at the user-set forward speed, as described above.

It is preferred that the program switch 157 can be used by the user to switch between different drive patterns. One such drive pattern is also the above-mentioned rocking drive pattern, which is implemented by the control unit 150 controlling at least one motor 151, 152 to propel the trolley 100 backwards and forwards according to a predetermined rotation pattern as a function of time.

Preferably, there are several such rocking drive patterns available, such as selectable using switch 157 once the trolley 100 has come to a standstill. Each such rocking drive pattern preferably comprises driving the trolley 100 in one direction forwards or backwards a certain distance, then driving the trolley 100 in the opposite direction a certain distance, and so on, indefinitively or during a predetermined maximum time period until the user terminates the rocking drive pattern, such as using switch 157.

Preferably, different such rocking drive patterns comprise different combinations of driving distances in both directions, accelerations when switching driving directions and driving speeds. According to one preferred embodiment, there are at least three different rocking drive patterns gradually varying from a smooth, slow rocking pattern, preferably with relatively longer driving distances in both directions, to a more harsh, fast and quirky rocking pattern, preferably with relatively short driving distances in both directions. Preferably, a series of rocking programs can be implemented, varying from a forwards/backwards motion of less than 5 cm up to a forwards/backwards motion of more than 10 cm, preferably with an associated decreasing rocking frequency and preferably also rolling speed between turns.

For all rocking drive patterns, it is preferred that the total trolley 100 forward/backward amplitude of the rocking drive pattern in question is smaller than a corresponding freedom of rotary movement amplitude defined by the mechanical brake 230, as discussed above.

Preferably, the distance the trolley can travel across the movement interval allowed by the mechanical brake 230 is at least 2 cm, preferably at least 5 cm, longer than the total rocking drive pattern amplitude, for all rocking drive patterns. This principle also applies to each individual wheel 111, 112 affected by the mechanical brake 230.

Namely, a rocking driving pattern will normally comprise driving motions straight forward and backward of the trolley 100. According to one preferred embodiment, at least one rocking driving pattern however comprises driving one wheel 151, or the wheels on one side of the trolley 100 in one direction, possibly while driving an opposite wheel 151 or wheels at another speed or in the other direction, so as to achieve a side-ways rotation motion, preferably in the form of a quick quirk of the trolley 100. Such side-ways rotations may be implemented as a rocking drive pattern in and of itself, but are preferably implemented as a part of another rocking drive pattern which is based upon a pure forwards/backwards motion. For instance, every five forwards/backwards rockings, or at irregular intervals, one or several side-ways quirks will be imparted to the trolley 100 by the control unit 150. This provides a less predictable and uniform rocking function, which may be advantageous to both children, biological samples etc.

It is preferred that the said rocking drive patterns, as is the case for all drive patterns described herein, as concerns the functionality difference between these programs, are implemented in software, preferably purely in software, and executed by the control unit 150 using the same hardware.

As described above, the trolley 100 is preferably arranged with a dead man's switch 154. T the control unit 150 is arranged to apply a braking mechanism of the said type in case the dead man's switch 154 is activated when the control unit 150 is powered and the information from said position or velocity sensor indicates that the trolley is currently moving.

Above, preferred embodiments have been described. However, it is apparent to the skilled person that many modifications can be made to the disclosed embodiments without departing from the scope of the enclosed claims.

For instance, much of the functionality described above, at least the battery 156 and the wheel assembly 200, can be encapsulated in an axis 110, which is then connected in a suitable way to an external user interface 153 for mounting on the handlebar 130. That way, the existing axis of an existing trolley can be replaced with an axis providing the functionality of the present invention. As a result, an existing trolley may easily be upgraded to become a trolley 100 according to the present invention.

There may be many more drive patterns, apart from the above described. For instance, one drive pattern may, when activated, propel the trolley 100 a predetermined distance forward, and the stop. Dive patterns may be added to the trolley 100 by upgrading the software, in a way which may be conventional as such, such as wirelessly over a WiFi internet connection and using the control unit 150.

In order to keep the trolley 100 from displacing too much from its parked position when implementing a rocking drive pattern, such rocking drive pattern is preferably always implemented during a maximum time period of not more than 30 minutes.

Furthermore, it is possible to arrange the trolley 100 with interchangeable main bodies 120 on the same chassis 101, so as to allow a user to switch between a child's support main body 120 and a shopping carriage main body 120, without necessarily installing support for a different set of drive patterns.

It is in general preferred that there is no torque sensor installed in the motor as such, for sensing a torque which is applied externally to the motor and for use in a propulsion feedback mechanism. The reason for this is that the above described motor current vs power feedback loop will effectively act as a feedback loop acting based upon an indirectly sensed externally applied motor torque, namely indirectly measured via the measured motor current.

Hence, the invention is not limited to the described embodiments, but can be varied within the scope of the enclosed claims.

## Claims

1. Wheel assembly (200) for a self-propelling trolley (100), which wheel assembly (200) is arranged to be mounted on said trolley (100) and comprises
a wheel (111,112);
an electric rotary motor (151,152);
an electric connector (220), arranged to connect the motor (151,152) to a battery (156) for powering the electric motor (151,152), which battery (156) may or may not be comprised in the wheel assembly (200); and
a mechanical brake (230) comprising an engagement part (231) associated with an engaged state, in which the mechanical brake (230) is activated so that a rotational movement of the wheel (111,112) is limited by the mechanical brake (230), and a disengaged state, in which the mechanical brake (230) is inactivated so that the wheel (111,112) can rotate freely, which electric motor (151,152) is arranged to perform a rocking drive pattern of the trolley (100) by the motor (151,152) propelling the wheel (111,112) such that the trolley (100) moves backwards and forwards;
**characterised in that** the mechanical brake (230) is arranged so that, in said engaged state of the engagement part (231), the wheel (111,112) can turn freely in relation to the trolley (100) between a first rotary limit position and a second rotary limit position but not beyond said first and second limit positions, the first and second rotary limit positions being arranged in relation to a radius of the wheel (111,112) so that the trolley (100) is allowed to move freely across a ground distance of between 5 and 20 cm in said engaged state of the engagement part, **in that** the engagement part (231) comprises a pin which is arranged to be inserted into a corresponding cavity (232) to achieve said engaged state, **in that** the cavity (232) comprises at least two elongated tracks (232c) of respective circular arc shape arranged along one and the same circle which circle is concentric with the wheel (111,112) when the wheel (111,112) is mounted on the trolley (100),**in that** each of said tracks (232c) comprises a respective first side wall (232a), defining said first rotary limit position, and a respective second side wall (232b), defining said second rotary limit position, and **in that** each of said tracks (232c) is arranged to allow said pin to, in said engaged state, travel along said track (232c) in question between said respective first (232a) and second (232b) side walls.

2. Wheel assembly (200) according to claim 1, **characterised in that** the cavity (232) comprises between 4 and 8 of said elongated tracks (232c).

3. Wheel assembly (200) according to claim 1 or 2, **characterised in that** said elongated tracks (232c) are in the form of a respective recession.

4. Wheel assembly (200) according to claim 1 or 2, **characterised in that** said elongated tracks (232c) are in the form of a respective through hole.

5. Self-propelling trolley assembly (100), comprising at least one wheel (111,112) which is driven by an electric motor (151,152;1), which electric motor (151,152;1) is powered by said battery (156); a rotation position or velocity sensor (9) arranged to sense a rotation position or rotation velocity of at least one trolley wheel (111,112); a user interface (153); and a control unit (150) arranged to regulate the electric motor (151,152;1) based upon input from said user interface (153) so as to affect a rotation of said wheel (111,112) according to particular drive patterns, **characterised in that** the said one wheel is a wheel assembly according to any one of the preceding claims, assembled on the trolley assembly (100).

6. Self-propelling trolley assembly (100) according to claim 5, **characterised in that** the control unit (150) is arranged to implement at least a feedback assisted propulsion drive pattern, based upon information read from said position or velocity sensor (9); and/or a free-wheeling drive pattern; in addition to said rocking drive pattern, **in that** all of said drive patterns are implemented using different drive voltage patterns to said electric motor (151,152;1), and **in that** the electric motor (151,152;1) is of a type in which the stator (2) comprises a number of stator (2) poles (7) which is not an integer multiple of a corresponding number of rotor (3) poles (7) and in which the stator (2) poles (7) are subdivided into at least three magnetically and electrically identical subsets (8) that are mounted one after the other around the angular direction of the electric motor (151,152;1).

7. Self-propelling trolley (100) assembly according to claim 5 or 6, **characterised in that** the trolley assembly (100) is a children's stroller or a transport trolley for liquid samples.

8. Self-propelling trolley assembly (100) according to any one of claims 5-7, **characterised in that** the mechanical brake is arranged to be activated by the control unit (150).

9. Self-propelling trolley assembly (100) according to any one of claims 5-8, **characterised in that** the motor (151,152;1) is arranged to be driven in a freewheeling mode, and **in that** the control unit (150) is arranged to activate said freewheeling mode during implementation of said free-wheeling drive pattern.

10. Self-propelling trolley assembly (100) according to claim 9, **characterised in that** the free-wheeling mode is implemented by switching off the voltage supplied to the motor (151,152;1).

11. Self-propelling trolley assembly (100) according to any one of claims 5-10, **characterised in that** the said rocking drive pattern is implemented by the control unit (150) controlling the motor (151,152;1) to propel the trolley assembly (100) backwards and forwards according to a predetermined rotation pattern as a function of time.

## Patentansprüche

1. Radanordnung (200) für einen selbstfahrenden Wagen (100), wobei die Radanordnung (200) so angeordnet ist, dass sie an dem Wagen (100) montiert werden kann und umfassend:
ein Rad (111,112);
einen elektrischen Drehmotor (151,152);
einen elektrischen Verbinder (220), der so angeordnet ist, dass er den Motor (151,152) mit einer Batterie (156) zum Betreiben des Elektromotors (151 ,152) verbindet, wobei die Batterie (156) in der Radanordnung (200) enthalten sein kann oder nicht enthalten sein kann; und
eine mechanische Bremse (230), die einen Eingriffsteil (231) umfasst, der einem Eingriffszustand,
in dem die mechanische Bremse (230) aktiviert ist, so dass eine Drehbewegung des Rades (111,112) durch die mechanische Bremse (230) begrenzt wird, und einem gelösten Zustand zugeordnet ist, in dem die mechanische Bremse (230) inaktiviert ist, so dass sich das Rad (111,112) frei drehen kann, wobei der Elektromotor (151,152) so angeordnet ist, dass er ein Schaukel-Antriebsmuster des Wagens (100) ausführt, indem der Motor (151,152) das Rad (111,112) derart antreibt, dass sich der Wagen (100) rückwärts und vorwärts bewegt;
**dadurch gekennzeichnet, dass**
die mechanische Bremse (230) so angeordnet ist, dass sich das Rad (111,112) in dem Eingriffszustand des Eingriffsteils (231) frei in Bezug auf den Wagen (100) zwischen einer ersten Drehbegrenzungsposition und einer zweiten Drehbegrenzungsposition, aber nicht über die erste und zweite Begrenzungsposition hinaus, drehen kann, wobei die erste und zweite Drehbegrenzungsposition in Bezug auf einen Radius des Rades (111 ,112) angeordnet sind, so dass sich der Wagen (100) in dem Eingriffszustand des Eingriffsteils frei über eine Bodenfreiheit von zwischen 5 und 20 cm bewegen kann, dass das Eingriffsteil (231) einen Stift umfasst, der so angeordnet ist, dass er in einen entsprechenden Hohlraum (232) eingeführt werden kann, um den Eingriffszustand zu erreichen, dass der Hohlraum (232) mindestens zwei längliche Führungen (232c) mit jeweiliger Kreisbogenform umfasst, die entlang ein und desselben Kreises angeordnet sind, welcher Kreis konzentrisch mit dem Rad (111 ,112) ist, wenn das Rad (111 ,112) auf dem Wagen (100) montiert ist, dass jede der Führungen (232c) eine jeweilige erste Seitenwand (232a) umfasst, dass jede der Führungen (232c) eine jeweilige erste Seitenwand (232a) aufweist, die die erste Drehbegrenzungsposition definiert, und eine jeweilige zweite Seitenwand (232b), die die zweite Drehbegrenzungsposition definiert, und dass jede der Führungen (232c) so angeordnet ist, dass sie es dem Stift ermöglicht, sich in dem Eingriffszustand entlang der betreffenden Führung (232c) zwischen der jeweiligen ersten (232a) und zweiten (232b) Seitenwand zu bewegen.

2. Radanordnung (200) nach Anspruch 1,
**dadurch gekennzeichnet, dass**
der Hohlraum (232) zwischen 4 und 8 der genannten länglichen Führungen (232c) umfasst.

3. Radanordnung (200) nach Anspruch 1 oder 2,
**dadurch gekennzeichnet, dass**
die länglichen Führungen (232c) in der Form einer jeweiligen Vertiefung ausgebildet sind.

4. Radanordnung (200) nach Anspruch 1 oder 2,
**dadurch gekennzeichnet, dass**
die länglichen Führungen (232c) in der Form eines jeweiligen Durchgangslochs ausgebildet sind.

5. Selbstangetriebene Wagenanordnung (100), umfassend
mindestens ein Rad (111,112), das von einem Elektromotor (151,152;1) angetrieben wird, wobei der Elektromotor (151,152;1) von der Batterie (156) mit Energie versorgt wird;
einen Rotationspositions- oder Geschwindigkeitssensor (9), der so angeordnet ist, dass er eine Rotationsposition oder Rotationsgeschwindigkeit von mindestens einem Wagenrad (111, 112) erfasst;
eine Benutzerschnittstelle (153); und
eine Steuereinheit (150), die so eingerichtet ist, dass sie den Elektromotor (151,152;1) auf der Grundlage von Eingaben von der Benutzerschnittstelle (153) so reguliert, dass eine Drehung des Rades (111,112) gemäß bestimmten Antriebsmustern beeinflusst wird,
**dadurch gekennzeichnet, dass**
das besagte eine Rad eine Radanordnung nach einem der vorhergehenden Ansprüche ist, die an der Wagenbaugruppe (100) montiert ist.

6. Selbstangetriebene Wagenanordnung (100) nach Anspruch 5,
**dadurch gekennzeichnet, dass**
die Steuereinheit (150) so eingerichtet ist, dass sie mindestens ein rückkopplungsunterstütztes Antriebsmuster, basierend auf Informationen, die von dem Positions- oder Geschwindigkeitssensor (9) gelesen werden, und/oder ein Freilauf-Antriebsmuster implementiert; zusätzlich zu dem Schaukel-Antriebsmuster, dadurch, dass alle Antriebsmuster unter Verwendung unterschiedlicher Antriebsspannungsmuster für den Elektromotor (151,152;1) implementiert werden, und dadurch,
dass der Elektromotor (151, 152;1) von einem Typ ist, bei dem der Stator (2) eine Anzahl von Polen (7) des Stators (2) aufweist, die kein ganzzahliges Vielfaches einer entsprechenden Anzahl von Polen (7) des Rotors (3) ist, und bei dem die Pole (7) des Stators (2) in mindestens drei magnetisch und elektrisch identische Untergruppen (8) unterteilt sind, die nacheinander um die Winkelrichtung des Elektromotors (151,152;1) herum angeordnet sind.

7. Selbstangetriebene Wagenanordnung (100) nach Anspruch 5 oder 6,
**dadurch gekennzeichnet, dass**
der Wagen (100) ein Kinderwagen oder ein Transportwagen für Flüssigproben ist.

8. Selbstangetriebene Wagenanordnung (100) nach einem der Ansprüche 5 bis 7,
**dadurch gekennzeichnet, dass**
die mechanische Bremse so angeordnet ist, dass sie von der Steuereinheit (150) aktiviert wird.

9. Selbstangetriebene Wagenanordnung (100) nach einem der Ansprüche 5 bis 8,
**dadurch gekennzeichnet, dass**
der Motor (151,152;1) so angeordnet ist, dass er in einem Freilaufmodus angetrieben wird, und dass die Steuereinheit (150) so eingerichtet ist, dass sie diesen Freilaufmodus aktiviert, und dass die Steuereinheit (150) so eingerichtet ist, dass sie den Freilaufmodus während der Implementierung des Freilauf-Antriebsmusters aktiviert.

10. Selbstangetriebene Wagenanordnung (100) nach Anspruch 9,
**dadurch gekennzeichnet, dass**
der Freilauf-Modus durch Abschalten der Spannung, die dem Motor (151,152;1) zugeführt wird, realisiert wird.

11. Selbstangetriebene Wagenanordnung (100) nach einem der Ansprüche 5 bis 10,
**dadurch gekennzeichnet, dass**
das Schaukel-Antriebsmuster durch das Steuern des Motors (151,152;1) durch die Steuereinheit (150), um die Wagenanordnung (100) gemäß einem vorbestimmten Drehmuster in Abhängigkeit von der Zeit vorwärts und rückwärts anzutreiben, implementiert wird.

## Revendications

1. Ensemble roue (200) pour un chariot automoteur (100), lequel ensemble roue (200) est agencé pour être monté sur ledit chariot (100) et comprend :
une roue (111, 112) ;
un moteur électrique rotatif (151, 152) ;
un connecteur électrique (220) agencé pour raccorder le moteur (151, 152) à une batterie (156) pour alimenter le moteur électrique (151, 152), laquelle batterie (156) peut ou peut ne pas être comprise dans l'ensemble roue (200) ; et
un frein mécanique (230) comprenant une partie de mise en prise (231) associée à un état mis en prise, dans lequel le frein mécanique (230) est activé, de sorte qu'un mouvement de rotation de la roue (111, 112) est limité par le frein mécanique (230) et un état dégagé, dans lequel le frein mécanique (230) est inactivé de sorte que la roue (111, 112) peut tourner librement, lequel moteur électrique (151, 152) est agencé pour réaliser un schéma d'entraînement de basculement du chariot (100) par le moteur (151, 152) propulsant la roue (111, 112) de sorte que le chariot (100) se déplace vers l'arrière et vers l'avant ;
**caractérisé en ce que** le frein mécanique (230) est agencé de sorte que, dans ledit état mis en prise de la partie de mise en prise (231), la roue (111, 112) peut tourner librement par rapport au chariot (100) entre une première position de limite de rotation et une seconde position de limite de rotation mais pas au-delà desdites première et seconde positions de limite, les première et seconde positions de limite de rotation étant agencées par rapport à un rayon de la roue (111, 112) de sorte que le chariot (100) est autorisé à se déplacer librement sur une distance au sol comprise entre 5 et 20 cm dans ledit état mis en prise de la partie de mise en prise, **en ce que** la partie de mise en prise (231) comprend une broche qui est agencée pour être insérée dans une cavité (232) correspondante pour obtenir ledit état mis en prise, **en ce que** la cavité (232) comprend au moins deux voies allongées (232c) en forme d'arc circulaire respectif le long d'un seul et même cercle, lequel cercle est concentrique avec la roue (111, 112) lorsque la roue (111, 112) est montée sur le chariot (100), **en ce que** chacune desdites voies (232c) comprend une première paroi latérale (232a) respective, définissant ladite première position de limite de rotation, et une seconde paroi latérale (232b) respective, définissant ladite seconde position de limite de rotation et **en ce que** chacune desdites voies (232c) est agencée pour permettre à ladite broche, dans ledit état mis en prise, de se déplacer le long de ladite voie (232c) en question entre lesdites première (232a) et seconde (232b) parois latérales respectives.

2. Ensemble roue (200) selon la revendication 1, **caractérisé en ce que** la cavité (232) comprend entre 4 et 8 desdites voies allongées (232c).

3. Ensemble roue (200) selon la revendication 1 ou 2, **caractérisé en ce que** lesdites voies allongées (232c) se présentent sous la forme d'un évidement respectif.

4. Ensemble roue (200) selon la revendication 1 ou 2, **caractérisé en ce que** lesdites voies allongées (232c) se présentent sous la forme d'un trou débouchant respectif.

5. Ensemble chariot automoteur (100) comprenant au moins une roue (111, 112) qui est entraînée par un moteur électrique (151, 152 ; 1), lequel moteur électrique (151, 152 ; 1) est alimenté par ladite batterie (156) ; un capteur de position ou de vitesse de rotation (9) agencé pour détecter une position de rotation ou une vitesse de rotation d'au moins une roue de chariot (111, 112) ; une interface utilisateur (153) ; et une unité de commande (150) agencée pour réguler le moteur électrique (151, 152 ; 1) sur la base de l'entrée de ladite interface utilisateur (153) afin d'effectuer une rotation de ladite roue (111, 112) selon des schémas d'entraînement particuliers, **caractérisé en ce que** ladite une roue est un ensemble roue selon l'une quelconque des revendications précédentes, assemblé sur l'ensemble chariot (100).

6. Ensemble chariot automoteur (100) selon la revendication 5, **caractérisé en ce que** l'unité de commande (150) est agencée pour mettre en oeuvre au moins un schéma d'entraînement de propulsion assisté par rétroaction, sur la base de l'information lue par ledit capteur de position ou de vitesse (9) ; et/ou un schéma d'entraînement de roue libre ; en plus dudit schéma d'entraînement de basculement, **en ce que** tous les schémas d'entraînement sont mis en oeuvre à l'aide de différents schémas de tension d'entraînement pour ledit moteur électrique (151, 152 ; 1) et **en ce que** le moteur électrique (151, 152 ; 1) est d'un type dans lequel le stator (2) comprend un certain nombre de pôles (7) de stator (2) qui n'est pas un multiple entier d'un nombre correspondant de pôles (7) de rotor (3) et dans lequel les pôles (7) de stator (2) sont divisés en au moins trois sousensembles magnétiquement et électriquement identiques (8) qui sont montés les uns après les autres autour de la direction angulaire du moteur électrique (151, 152 ; 1).

7. Ensemble chariot automoteur (100) selon la revendication 5 ou 6, **caractérisé en ce que** l'ensemble chariot (100) est une poussette pour enfant ou un chariot de transport pour les échantillons liquides.

8. Ensemble chariot automoteur (100) selon l'une quelconque des revendications 5 à 7, **caractérisé en ce que** le frein mécanique est agencé pour être activé par l'unité de commande (150).

9. Ensemble chariot automoteur (100) selon l'une quelconque des revendications 5 à 8, **caractérisé en ce que** le moteur (151, 152 ; 1) est agencé pour être entraîné dans un mode roue libre, et **en ce que** l'unité de commande (150) est agencée pour activer ledit mode roue libre pendant la mise en oeuvre dudit schéma d'entraînement en roue libre.

10. Ensemble chariot automoteur (100) selon la revendication 9, **caractérisé en ce que** le mode roue libre est mis en oeuvre en coupant la tension fournie au moteur (151, 152 ; 1).

11. Ensemble chariot automoteur (100) selon l'une quelconque des revendications 5 à 10, **caractérisé en ce que** ledit schéma d'entraînement de basculement est mis en oeuvre par l'unité de commande (150) commandant le moteur (151, 152 ; 1) pour propulser l'ensemble chariot (100) vers l'arrière et vers l'avant selon un schéma de rotation prédéterminé en fonction du temps.
